(19) Europäisches Patentamt
European Patent Office
Office européen des brevets

(11) **EP 4 730 783 A1**

(12) **EUROPEAN PATENT APPLICATION**

(43) Date of publication:
**22.04.2026 Bulletin 2026/17**

(21) Application number: 24306734.5

(22) Date of filing: **17.10.2024**

(51) International Patent Classification (IPC):
**H04N 19/117** (2014.01)   **H04N 19/86** (2014.01)

(52) Cooperative Patent Classification (CPC):
**H04N 19/117; H04N 19/176; H04N 19/82;
H04N 19/86**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **MARZUKI, Ismail
MONTREAL, H3J 1V4 (CA)**
• **PURI, Saurabh
SAINT-LAZARE, J7T 0P6 (CA)**
• **LEFEBVRE, Frederic
35000 RENNES (FR)**
• **BOISSON, Guillaume
35137 PLEUMELEUC (FR)**

(74) Representative: **Vossius & Partner
Patentanwälte Rechtsanwälte mbB
Siebertstraße 3
81675 München (DE)**

(54) **PARAMETER ADJUSTMENT FOR BILATERAL FILTER ON INTRA PREDICTION**

(57) Systems, methods, and instrumentalities are disclosed for determining a mean absolute difference (MAD) of a plurality of coding block samples. The MAD of the plurality of coding block samples may be determined to be used as a bilateral filtering (BIF) parameter for intra BIF. An intra-predicted sample of a coding block may be generated based on the BIF parameter. The coding block may be decoded based on the intra-predicted sample of the coding block. The BIF parameter may be a scale factor. The scale factor may not be determined using a look up table (LUT). The scale factor may not be determined using a look up table (LUT) that includes one or more coefficients associated with the coding block.

**FIG. 13**

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for determining a bilateral filtering (BIF) parameter. The mean absolute difference (MAD) of the plurality of coding block samples may be determined to be used as a BIF parameter, for example, for intra BIF. An intra-predicted sample of a coding block may be generated based on the BIF parameter. The coding block may be decoded or encoded based on the intra-predicted sample of the coding block. The BIF parameter may be a scale factor. The scale factor may not be determined using a look up table (LUT). The scale factor may not be determined using a look up table (LUT) that includes one or more coefficients associated with the coding block.

The MAD of the plurality of the coding block samples may be constrained to a range of values. A maximum value of the range may be a quantization parameter associated with the coding block. The BIF parameter may be a first BIF parameter. The MAD of the plurality of coding block samples may be determined to be used as a scale factor associated with a second BIF parameter. The second BIF parameter may be determined based on the scale factor associated with the second BIF parameter. The second BIF parameter may be a BIF offset. The intra-predicted sample of the coding block may be generated further based on the second BIF parameter.

In examples, the plurality of coding block samples may be a plurality of reference samples in a reference coding block of the coding block. The BIF parameter may be applied to the plurality of reference samples to generate a plurality of filtered reference samples. The intra-prediction sample of the coding block may be generated by performing an intra-prediction of the coding block using at least one of the plurality of filtered reference samples.

In some examples, the intra-predicted sample of the coding block may be a filtered intra-predicted sample of the coding block. A plurality of reference samples of the coding block may be obtained. An intra prediction of the coding block may be performed using the plurality of reference samples of the coding block. The BIF parameter may be applied to the intra prediction of the coding block to generate the filtered intra-predicted sample of the coding block. A residual may be obtained based on a transform unit (TU) associated with the coding block. The coding block may be decoded further based on the residual.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example of an 8x8 TU block and a filter aperture for a sample located at (1,1).
FIG. 5 illustrates an example coefficient look-up-table that may be used to obtain weights of a filter.
FIG. 6 illustrates example neighboring samples that may be utilized in a bilateral filter.
FIG. 7 illustrates example windows covering two samples utilized in weight calculation.
FIG. 8 illustrates examples of samples that may be used in the weighted sum.
FIG. 9 illustrates an example filter (e.g., a bilateral filter (BIF)) (e.g., sample adaptive offset (SAO) may use samples from the deblocking stage as input).
FIG. 10 illustrates an example naming convention for samples surrounding a center sample, $I\_C$.
FIG. 11 illustrates an example filtering stage of BIF-chroma.
FIG. 12 illustrates an example of in-loop filtering.
Fig. 13 illustrates an example shape of a BIF filter with 12 offsets.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

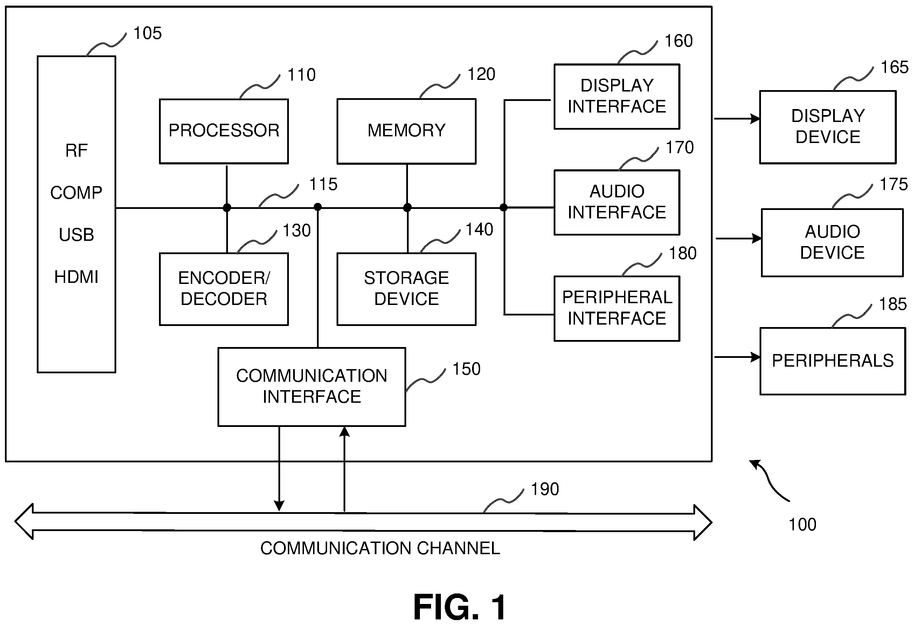

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

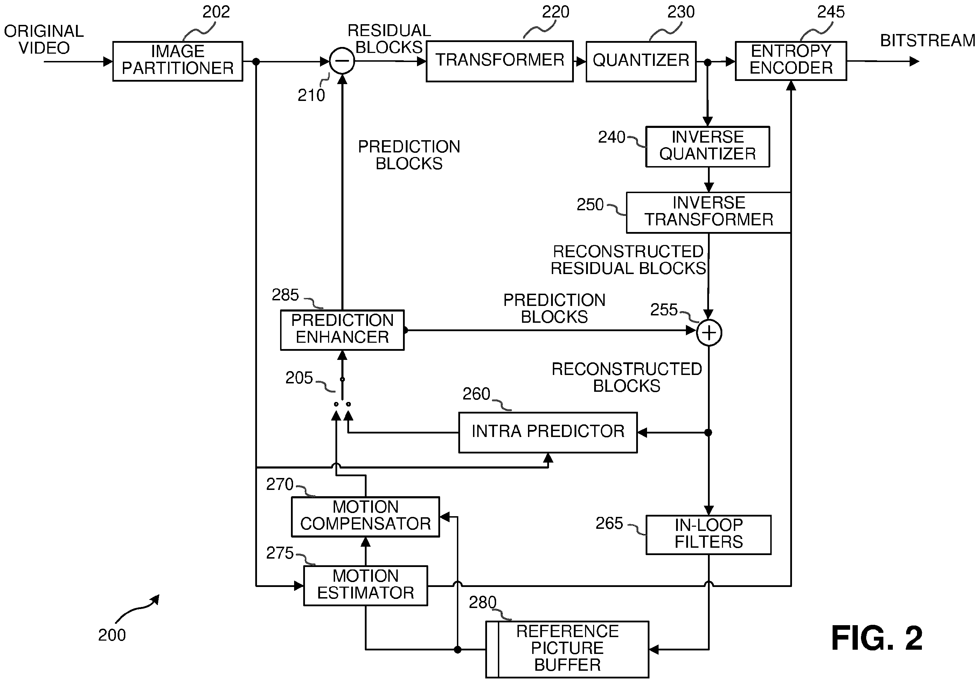

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

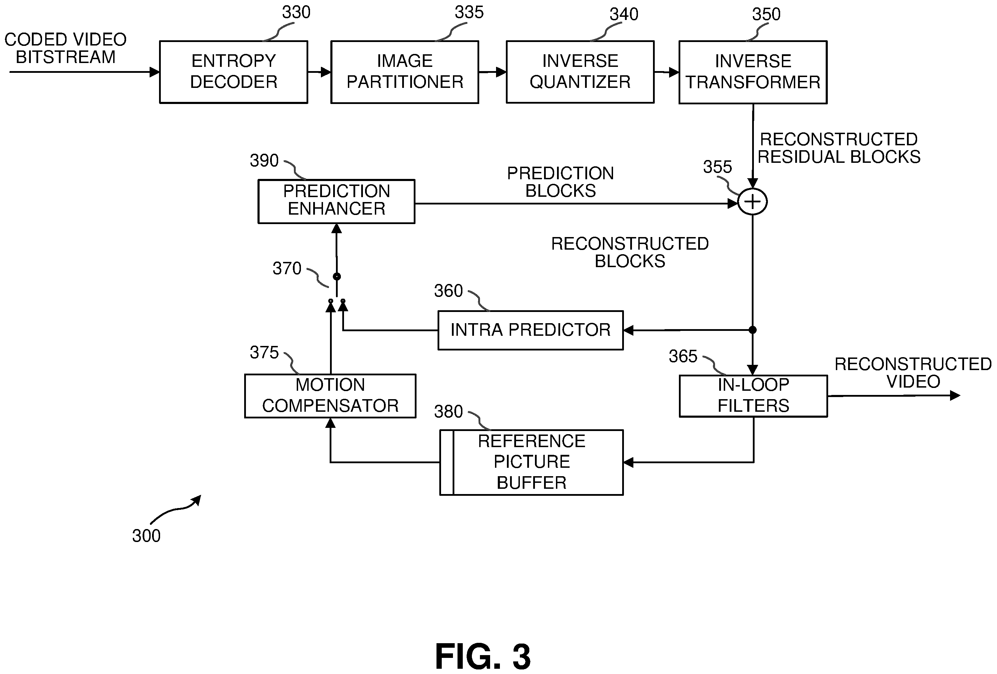

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for determining a mean absolute difference (MAD) of a plurality of coding block samples. The MAD of the plurality of coding block samples may be determined to be used as a bilateral filtering (BIF) parameter for intra BIF. An intra-predicted sample of a coding block may be generated based on the BIF parameter. The coding block may be decoded or encoded based on the intra-predicted sample of the coding block. The BIF parameter may be a scale factor. The scale factor may not be determined using a look up table (LUT). The scale factor may not be determined using a look up table (LUT) that includes one or more coefficients associated with the coding block.

The MAD of the plurality of the coding block samples may be constrained to a range of values. A maximum value of the range may be a quantization parameter associated with the coding block. The BIF parameter may be a first BIF parameter. The MAD of the plurality of coding block samples may be determined to be used as a scale factor associated with a second BIF parameter. The second BIF parameter may be determined based on the scale factor associated with the second BIF parameter. The second BIF parameter may be a BIF offset. The intra-predicted sample of the coding block may be generated further based on the second BIF parameter.

The plurality of coding block samples may be a plurality of reference samples in a reference coding block of the coding block. The BIF parameter may be applied to the plurality of reference samples to generate a plurality of filtered reference samples. The intra-prediction sample of the coding block may be generated by performing an intra-prediction of the coding block using at least one of the plurality of filtered reference samples. The intra-predicted sample of the coding block may be a filtered intra-predicted sample of the coding block.

A plurality of reference samples of the coding block may be obtained. An intra prediction of the coding block may be performed using the plurality of reference samples of the coding block. The BIF parameter may be applied to the intra prediction of the coding block to generate the filtered intra-predicted sample of the coding block. A residual may be obtained based on a transform unit (TU) associated with the coding block. The coding block may be decoded further based on the residual.

Features described herein may be associated with bilateral filtering (BIF) in context of video coding. Performing quantization in the transform domain may be a technique for preserving information in images and video compared to quantizing in the pixel domain. Quantized transform blocks may produce ringing artifacts around edges, both in still images and in moving objects in videos. Applying a bilateral filter (BIF) may (e.g., significantly) reduce ringing artifacts. BIF may be applied on decoded sample values directly after the inverse transform. BIF may be performed on reconstructed samples post deblock filtering, with a larger filter, and with a calculated (e.g., optimized) LUT (approximation of the weights of the filter).

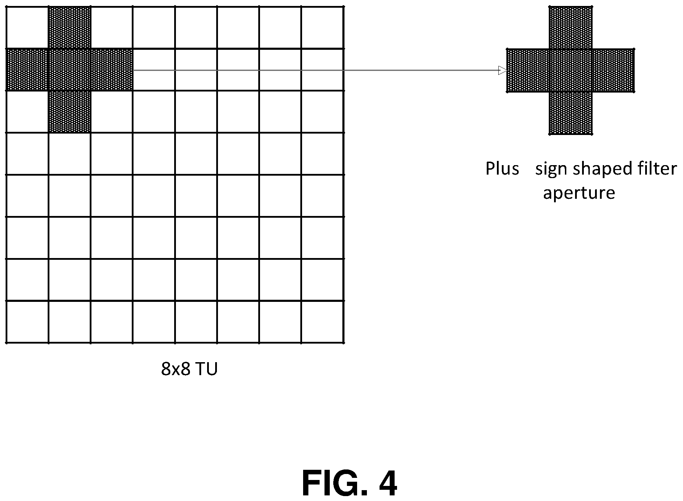

A bilateral filter may be derived from gaussian filters and may be described as follows: a (e.g., each) sample in the reconstructed picture may be replaced by a weighted average of itself and its neighbors. The weights may be calculated based on the distance from the center sample as well as the difference in sample values. Because the filter is in the shape of a small plus sign as shown in FIG. 4, the distances (e.g., all of the distances) may be 0 or 1.

FIG. 4 illustrates an example of an 8x8 TU block and the filter aperture for the sample located at (1,1). A sample located at (i, j) may be filtered using its neighboring sample (k, l). The weight $\omega(i, j, k, l)$ is the weight assigned for sample (k, l) to filter the sample (i, j), and it may be defined as:

$$\omega(i, j, k, l) = e^{\left( -\frac{(i-k)^2 + (j-l)^2}{2\sigma_d^2} - \frac{\|I(i,j) - I(k,l)\|^2}{2\sigma_r^2} \right)} \qquad (Eq.\,1)$$

I(i, j) and I(k, l) may be the original reconstructed intensity value of samples (i, j) and (k,l) respectively. $\sigma_d$ is the spatial parameter, and $\sigma_r$ is the range parameter. The property (or strength) of the bilateral filter may be controlled by these two parameters. Samples located closer to the sample to be filtered, and samples having smaller intensity difference to the sample to be filtered, may have larger weight than samples further away and with larger intensity difference. $\sigma_d$ is based on the transform unit size (Eq. 2), and $\sigma_r$ is based on the QP used for the current block (Eq. 3).

$$\sigma_d = 0.92 - \frac{\min(\text{TU block width, TU block height})}{40} \qquad (Eq.\,2)$$

$$\sigma_r = \max\left( \frac{(QP - 17)}{2}, 0.01 \right) \qquad (Eq.\,3)$$

The bilateral filter may apply to a (e.g., each) TU block directly after the inverse transform in both the encoder and the decoder. Subsequent intra-coded blocks may predict from the sample values that have been filtered with the bilateral filter. The bilateral filter operation may be included in the rate-distortion decisions in the encoder and this may be how the filter has been implemented (e.g., in JEM).

A sample in the transform unit may be filtered using its direct neighboring samples (e.g., only its direct neighboring samples). The filter may have a plus sign shaped filter aperture centered at the sample to be filtered.

The output filtered sample value $I_D (i, j)$ may be calculated as:

$$I_D(i, j) = \frac{\sum_{k,l} I(k, l) * \omega(i, j, k, l)}{\sum_{k,l} \omega(i, j, k, l)} \qquad (Eq.\,4)$$

For TU sizes larger than $16 \times 16$, the block may be treated as (e.g., several) $16 \times 16$ blocks using TU block width = TU block height = 16 in Equation 2. Rectangular blocks may be treated as (e.g., several) instances of square blocks. In order to reduce the number of calculations, the proposed bilateral filter may be implemented using a look-up-table (LUT) storing (e.g., all) weights for a particular QP in a two-dimensional array. The LUT may use the intensity difference between the sample to be filtered and the reference sample as the index of the LUT in one dimension, and the TU size as the index in another dimension. For (e.g., efficient) storage of the LUT, weights may be rounded to 8-bit precision.

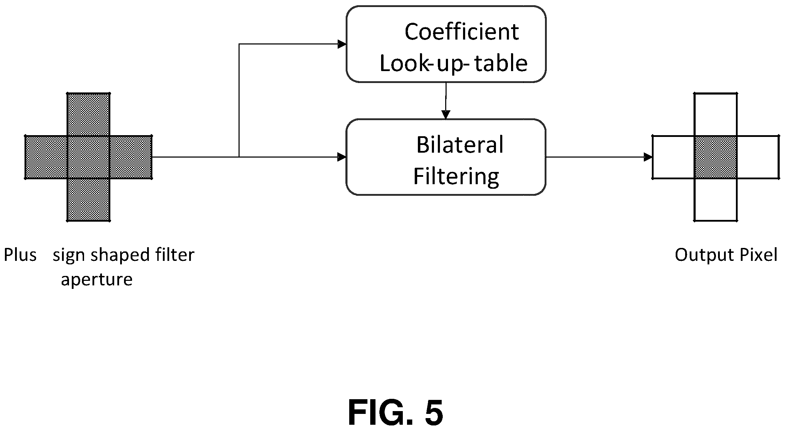

FIG. 5 illustrates a coefficient look-up-table that may be used to obtain the weights of the filter. The proposed bilateral filter may be a five-tap filter in the shape of a plus sign. The strength of the filter may be based on the TU size and QP.

The filter strength may be lower for blocks using inter prediction. Inter predicted blocks may have less residual than intra predicted blocks. The reconstruction of inter predicted blocks may be filtered less. The filter strength for intra predicted blocks may be set as described herein, and for inter predicted blocks the following spatial weight may be used:

$$\sigma_d = 0.72 - \frac{\min(\text{TU block width, TU block height})}{40} \qquad (Eq.\,5)$$

The size of the lookup table (LUT) for the bilateral filter may be is reduced. The goal of the LUT may be to pre-calculate the weights of the bilateral filter:

$$\omega(i,j,k,l) = e^{\left(-\frac{(i-k)^2+(j-l)^2}{2\sigma_d^2} - \frac{\|I(i,j)-I(k,l)\|^2}{2\sigma_r^2}\right)}, \qquad (Eq.\,6)$$

so that the filtered pixel $I_F(i, j)$ can be calculated as

$$I_F(i,j) = \frac{\sum_{k,l} I(k,l) * \omega(i,j,k,l)}{\sum_{k,l} \omega(i,j,k,l)}. \qquad (Eq.\,7)$$

for the center weight, e.g., the weight for the center pixel, $k = i$ and $j = l$. Hence $(i - k) = (j - l) = 0$ and $I(i,j) = I(k, l)$ and the center weight $\omega(i, j, i, j)$ may be 1.0.

For (e.g., all) other weights, $(i - k)^2 + (j - l)^2 = 1$ since the 4-neighbors of a pixel are included in the filtering (a "plus-shaped" filter kernel). Therefore

$$\begin{cases} \omega_{center} = 1.0 \\ \omega_{other} = e^{\left(-\frac{1}{2\sigma_d^2} - \frac{\|I - I_C\|^2}{2\sigma_r^2}\right)} \end{cases}$$

where $I_c$ is the intensity of the center pixel. Since the center weight is 1.0, a LUT may or may not be used (e.g., may not be needed) for it.

For the other weights, a 3D LUT may be indexed over the following dimensions. _Modes: the variable $\sigma_d$ may take 6 different values depending upon the TU size and type of block; 3 (e.g., 3 each) for intra blocks (4×4, 8×8, and 16×16 blocks) and 3 (e.g., 3 each) for inter blocks (4×4, 8×8, and 16×16 blocks). Rectangular blocks may use the smaller dimension. QPs: the variable $\sigma_r$ is calculated from the QP value and the filter may be turned on for QP 18 and higher: For QP 17 and lower $\sigma_r$ may becomes too small to change the filtered value. Therefore, this dimension may take 34 different values (18 through 51). Absolute intensity difference: The value $\|I - I_c\|$ may take 1024 different values for 10-bit luma values.

A weight may be stored using an unsigned short. A brute force implementation may need 6*34*1024*2 = 417 792 bytes of LUT memory.

The division may be removed and replaced with a multiplication and a lookup-table (LUT). To keep the size of the LUT as small as possible, from Eq.7 the nominator and the denominator of the division may be as small as possible. To reduce the nominator, the filtering equation may be rewritten using differences. To reduce the denominator, the large center weight value for inter blocks of size 16×16 and larger may be avoided by turning the filter off for these blocks. Since the filter (shape 2x2) touches the center pixel and its 4-neighbors, this equation (Eq.7) may be written as

$$I_F = \frac{I_C \omega_C + I_L \omega_L + I_R \omega_R + I_A \omega_A + I_B \omega_B}{\omega_C + \omega_L + \omega_R + \omega_A + \omega_B}, \qquad (Eq.\,8)$$

where $I_C$ is the intensity of the center pixel, and $I_L$, $I_R$, $I_A$ and $I_B$ are the intensities for the left, right, above and below pixel respectively. $\omega_C$ is the weight for the center pixel, and $\omega_L$, $\omega_R$, $\omega_A$ and $\omega_B$ are the corresponding weights for the neighboring pixels.

The nominator may become relatively big. Equation 8 may be rewritten as

$$I_F = I_C + \frac{\omega_L \Delta I_L + \omega_R \Delta I_R + \omega_A \Delta I_A + \omega_B \Delta I_B}{\omega_C + \omega_L + \omega_R + \omega_A + \omega_B}, \qquad (Eq.\,9)$$

where $\Delta I_L = I_L - I_C$ and $\Delta I_R = I_R - I_C$, etc.

When an (e.g., large) difference in intensity $\Delta I$ occurs, the bilateral filter may choose a (e.g., small) weight $\omega$. The product $\Delta I * \omega$ may be small, since $\Delta I$ may be small or $\omega$ may be small.

The denominator in Equation 9 may be equal to $\omega_C + \omega_L + \omega_R + \omega_A + \omega_B$. The maximum value for the non-center weights $\omega_L$, $\omega_R$, $\omega_A$ and $\omega_B$ may be 31. The center weight may take the following values, as shown in Table 1.

Table 1: Center weight values based on the prediction mode and the TB length (e.g., JEM).

| | min(TUwidth, TUheight) | | |
|---|---|---|---|
| | 4 | 8 | 16 |
| intra | 65 | 81 | 196 |
| inter | 113 | 196 | 4079 |

A simplification may apply for the bilateral filter. For a (e.g., each) block, the inverse quantized transform coefficients may be examined, and if they contain one (e.g., only one) non-zero coefficient that is at the DC position, bilateral filtering may be skipped for the associated reconstructed block.

A filtering process may be described herein. Once a bilateral filter is applied to luma blocks with non-zero transform coefficients and slice quantization parameter larger than 17, the usage of the bilateral filter may or may not be signaled (e.g., may not need to be signaled). The bilateral filter, if applied, may be performed on decoded samples right after the inverse transform. The filter parameters, e.g., weights, may be explicitly derived from the coded information. The filtering process (Eq.7) may be rewritten as:

$$P'_{0,0} = P_{0,0} + \sum_{k=1}^{K} W_k \left( P_{k,0} - P_{0,0} \right) \times \left( P_{k,0} - P_{0,0} \right),$$

where $P_{0,0}$ is the intensity of the current sample and $P'_{0,0}$ is the modified intensity of the current sample, $P_{k,0}$ and $W_k(\cdot)$ are the intensity and weighting parameter for the k-th neighboring sample, respectively.

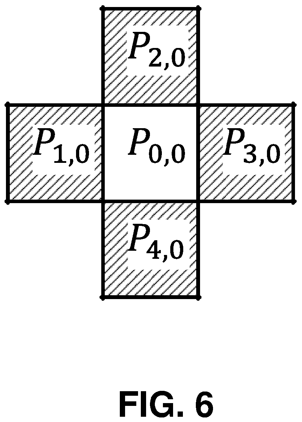

An example of a (e.g., one) current sample and its four neighboring samples (e.g., K=4), in the shape of a plus sign, is depicted in FIG. 6. FIG. 6 illustrates neighboring samples utilized in a bilateral filter.

The weight $W_k(x)$ associated with the k-th neighboring sample may be defined as follows:

$$W_k(x) = Distance_k \times Range_k(x)$$

wherein

$$Distance_k = e^{\left( \frac{-10000}{2\sigma_d^2} \right)} \bigg/ 1 + 4 * e^{\left( \frac{-10000}{2\sigma_d^2} \right)},$$

$$Range_k(x) = e^{\left( -\frac{x^2}{8*(QP-17)*(QP-17)} \right)}$$

and $\sigma_d$ is dependent on the coded mode and coding block sizes.

To modify (e.g., further improve) the coding performance, for inter-coded blocks, the intensity difference between current sample and one of its neighboring samples may be replaced by a representative intensity difference among two windows covering current sample and the neighboring sample. The equation of filtering process may be revised to:

$$P'_{0,0} = P_{0,0} + \sum_{k=1}^{N} W_k \left( \frac{1}{M} \sum_{m=-\frac{M}{2}}^{\frac{M}{2}} abs\left( P_{k,m} - P_{0,m} \right) \right) \times \left( P_{k,0} - P_{0,0} \right)$$

wherein $P_{k,m}$ and $P_{0,m}$ represent the m-th sample value within the windows centered at $P_{k,0}$ and $P_{0,0}$, respectively.

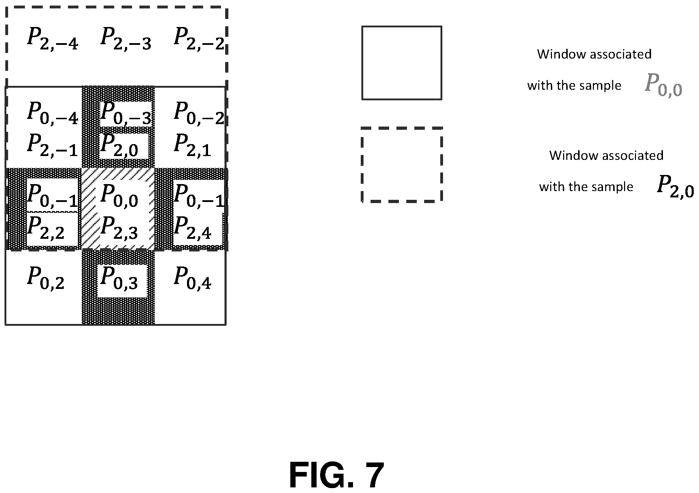

The window size may be set to 3×3. FIG. 7 illustrates windows covering two samples utilized in weight calculation. Two windows covering $P_{2,0}$ and $P_{0,0}$ are depicted in FIG. 7. A spatial filter strength adjustment based on CU area size for a bilateral filter may be described herein.

The size of the LUT may be reduced to approximate the numerator and denominator in the following equation:

$$I_F = I_C + \frac{w_L \Delta I_L + w_R \Delta I_R + w_A \Delta I_A + w_B \Delta I_B}{w_C + w_L + w_R + w_A + w_B},$$

where $I_F$ is the filtered sample, $I_C$ is the intensity of the center sample (the sample to be filtered), $I_L$, $I_R$, $I_A$ and $I_B$ are the intensity of the samples to the left, to the right, above and below respectively.

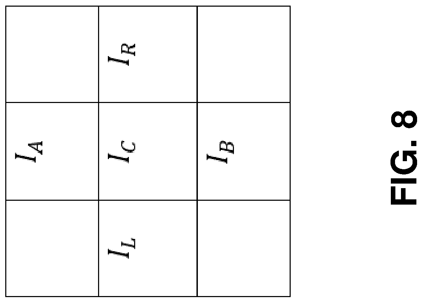

FIG. 8 illustrates samples that may be used in the weighted sum. The delta values are differences against the center sample; $\Delta I_L = I_L - I_C$ and $\Delta I_R = I_R - I_C$, etc. The weights are calculated as

$$w_X = e^{-\frac{1}{2\sigma_d^2} - \frac{|\Delta I_X|^2}{2\sigma_r^2}}$$

where $X$ can be $A$, $B$, $L$ or $R$.

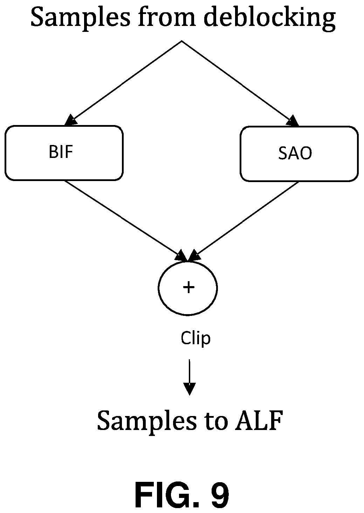

The bilateral filter may be combined with the sample adaptive offset (SAO) loop filter. The filter may be carried out in the sample adaptive offset (SAO) loop-filter stage, as shown in FIG. 9. The filter (BIF) and SAO may use samples from the deblocking stage as input. Both may create an offset, and these may be added to the input sample and clipped. Both the proposed bilateral filter (BIF) and SAO may use samples from deblocking as input. A filter may create an offset per sample, and these may be added to the input sample and then clipped.

FIG. 9 illustrates examples wherein the proposed filter (BIF) and SAO use samples from the deblocking stage as input. Both create an offset, and these may be added to the input sample and clipped. The output sample $I_{OUT}$ may be obtained as

$$I_{OUT} = clip3(I_C + \Delta I_{BIF} + \Delta I_{SAO})$$

where $I_C$ is the input sample from deblocking, $\Delta I_{BIF}$ is the offset from the bilateral filter and $\Delta I_{SAO}$ is the offset from SAO.

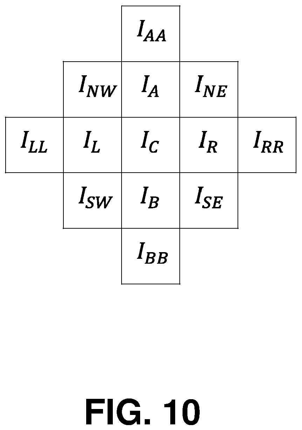

A diamond 5x5 filter kernel may be used together with 26 tables of 16 entries (e.g., 16 entries each). The filter kernel may operate in the same loop-filter stage as SAO, as depicted in FIG. 10. FIG. 10 illustrates a naming convention for samples surrounding the center sample, $I_C$.

$I_C$ the center and the samples surrounding the center sample are denoted A, B, L and R that stands for above, below, left and right and where NW, NE, SW, SE stands for north-west etc. AA stands for above-above, BB for below-below etc.

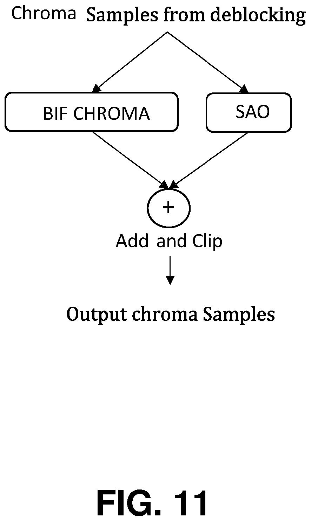

The BIF-chroma may be performed in parallel with the SAO process as shown in FIG. 11. The BIF-chroma and SAO may use the same chroma samples that are produced by the deblocking filter as input and generate two offsets per chroma sample in parallel. The two offsets may (e.g., may both) be added to the input chroma sample to obtain a sum, which may be clipped to form the final output chroma sample value. The proposed BIF-chroma may provide an on/off control mechanism on the CTU level and slice level. FIG. 11 illustrates an example filtering stage of BIF-chroma.

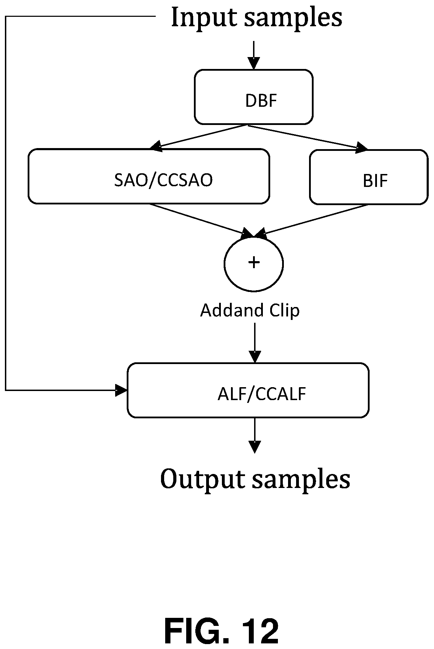

The in-loop filtering flow and BIF's position in the in-loop filtering flow may be presented in FIG. 12. FIG. 12 illustrates an example of in-loop filtering. For an output sample, three offsets may be calculated and clipped:

$$S_{OUT} = clip(S_{IN} + \delta_{SAO} + \delta_{CCSAO} + \delta_{BIF}).$$

The calculation of BIF's offset ($\delta_{BIF}$) may be modified as follows:
The TU scale factor may depend on the TU shape size; the TU scale factor may depend on the mean absolute difference (MAD) of the TU; and/or the BIF LUTs may be interpolated.

For each output sample, three offsets may be calculated and/or clipped:

$$S_{OUT} = clip(S_{IN} + \delta_{SAO} + \delta_{CCSAO} + \delta_{BIF}).$$

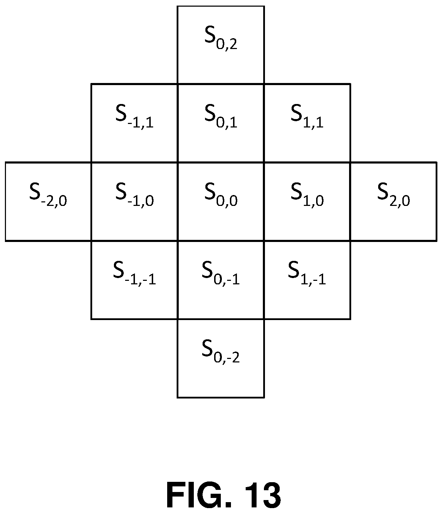

Modifications may be made in the calculation of BIF's offset ($\delta_{BIF}$). FIG. 13 illustrates an example shape of a BIF. In an example of a filter, a 5x5-star filtering shape shown in FIG. 13 may be used to calculate the BIF offset ($\delta_{BIF}$). The BIF offset $\delta_{BIF}$ may equal a sum of 12 offsets.

$$\delta_{BIF} = \left( C_{TU} \cdot \left[ \sum sign(S_{i,j} - S_{0,0}) \cdot F_{BIF,i,j,QP}(|S_{i,j} - S_{0,0}|) \right] + 16 \right) \gg 5, \qquad (1)$$

$F_{BIF,i,j,QP}$ may be based on a 26x16 LUT of 8-bit integers denoted by $LUT_{base,QP}$ (for 26 QPs from 17 to 42 and 16 intervals of sample difference). For the innermost positions (e.g., $\{i, j\} = \{-1,0\}, \{1,0\}, \{0, -1\}$ or $\{0,1\}$), the LUT may be used as-is (e.g., $F_{\text{BIF},i,j,\text{QP}}(d) = \text{LUT}_{\text{base,clip(QP,17,42)}}(\min \{ (d + 4) >> 3, 15 \})$). For remaining positions, the LUT output may be right shifted: $F_{\text{BIF},i,j,\text{QP}}(d) = \text{LUT}_{\text{base,clip(QP,17,42)}}(\min \{ (d + 4) >> 3, 15 \}) >> 1$.

$$s_{\text{TU}} = \min (\text{width}_{\text{TU}}, \text{height}_{\text{TU}}).$$

The TU-based scale factor $C_{\text{TU}}$ may be defined by Table 1.

Table 1. TU scale factor

| Prediction mode | $s_{\text{TU}} < 4$ | $4 < s_{\text{TU}} < 16$ | $s_{\text{TU}} \geq 16$ |
|---|---|---|---|
| Inter-prediction | 2 | 2 | 1 |
| Intra-prediction | 3 | 2 | 1 |

The base LUT size may be preserved. The content of the base LUT may be changed. The calculation of $F_{\text{BIF},i,j,\text{QP}}$ may be changed. The proposed method may use (e.g., three) scale factors ($C_{1;0}$, $C_{1,1}$ and $C_{2,0}$) to pre-compute (e.g., three) LUTs for (e.g., three) different neighbor distances (1, $\sqrt{2}$, and 2), for example:

$$\text{LUT}_{i,j,\text{QP}}(k) = \left( C_{i,j} \cdot \text{LUT}_{\text{base,QP}}(k) + 4 \right) >> 3,$$

and/or the averaging linear interpolation for the half of the values of the cut off least significant bits, for example:

$$F_{\text{BIF},i,j,\text{QP}}(d) = (v_1 + v_2 + 1) >> 1,$$

$v_1$ and $v_2$ may be successive entries of $\text{LUT}_{i,j,\text{QP}}$. For chroma, the number of cut off bits may be decreased from 3 to 2.

The number of cut off bits in formula (1) may be increased from 5 to 8.

$$C_{\text{TU}} = C_{w,h}^{\text{TU}} + C_{\text{MAD}}^{\text{TU}},$$

$C_{w,h}^{\text{TU}}$ may be based on the TU's shape and/or size(s) (e.g., shape size(s)). $C_{\text{MAD}}^{\text{TU}}$ may be based on the mean absolute difference (MAD) of the TU. $C_{w,h}^{\text{TU}}$ and/or $C_{\text{MAD}}^{\text{TU}}$ may be calculated using LUTs. $\text{LUT}_{w,h}$ may be a 2D $8 \times 8$ lookup table with non-negative 8-bit integer values. $\text{LUT}_{\text{MAD}}$ may be a 1D 16-entry lookup table with non-negative 8-bit integer values. These scale factors may be defined as follows:

$$C_{w,h}^{\text{TU}} = \text{LUT}_{w,h}(\log_2 \text{width}_{\text{TU}}, \log_2 \text{height}_{\text{TU}}),$$

$$C_{\text{MAD}}^{\text{TU}} = \text{LUT}_{\text{MAD}}(\min( \text{MAD}_{\text{TU}} >> 4, 15))$$

The MAD of a ($h \times w$)-size TU with the channel samples denoted by $s_{i,j}$ may be defined as follows:

$$\text{MAD} = \frac{1}{hw}\sum_{i=1}^{h} \sum_{j=1}^{w} \left| s_{i,j} - \frac{1}{hw}\sum_{i=1}^{h} \sum_{j=1}^{w} s_{i,j} \right|$$

In total, four 64-byte tables $\text{LUT}_{w,h}$ and four 16-byte tables $\text{LUT}_{\text{MAD}}$ may be introduced (for luma/chroma component, for intra/inter prediction). $C_{\text{TU}}$ may be a constant for all samples of the same channel inside a TU (e.g., one TU).

The number of arithmetic operations per sample and the size of memory required to store the LUTs in the proposed BIF may be compared against [1-2] in Table 2. The value obtained in the modified version of formula (1) before right bit-shifting belongs to the interval [-15509, 15765]. Arithmetic may be done in 15-bit singed integers.

Table 2. Comparison of the complexity of the proposed BIF against the baseline [1-2]

| BIF version | Bit width (maximal) | Summations (per sample) | Multiplications (per sample) | LUT lookups (per sample) | LUTs memory (bytes) |
|---|---|---|---|---|---|
| ECM 9.0 | 12 | 18 | 0 | 6 | 832 |
| Proposed | 15 | 25 | 1 | 12 | 2816 |

An intra bilateral filter (Intra BIF) may be provided. In the current intra prediction design, intra reference samples may be selected from the reconstructed areas. The unfiltered or 1-2-1 filtered intra reference samples may be used to generate the intra prediction. Unfiltered intra reference samples may contain the compression noise while 1-2-1 filtered intra reference samples may over-smooth the sharp edges. The intra prediction samples may be generated from the intra reference samples. In general, the generated intra prediction samples may contain the coding noise since the interpolation and weighting are involved in the intra prediction process.

Bilateral Filtering (BIF) for intra-prediction may filter the intra reference samples (e.g., before they are used to generate the intra prediction) and/or filter the generated intra prediction samples before they are used in the next processes to reduce the noise level inside the prediction samples.

In examples, one or more reference samples in a reference coding block of a coding block may be determined. A BIF parameter (e.g., a scale factor for intra BIF) may be applied to the reference samples to generate one or more filtered reference samples. An intra-prediction sample of the coding block may be generated by performing an intra-prediction of the coding block using at least one of the filtered reference samples.

In some examples, the intra-predicted sample of the coding block may be a filtered intra-predicted sample of the coding block. An intra prediction of the coding block may be performed using the reference samples of the coding block. The BIF parameter may be applied to the intra prediction of the coding block to generate the filtered intra-predicted sample of the coding block. By applying BIF (e.g., only) to the generated intra prediction samples, BIF may be reported as suitable to reduce coding noise inside prediction since it can achieve edge-protection resulting in improving the intra prediction performance.

In some examples, the BIF used for intra prediction may be similar to the BIF used in the loop-filtering stage which may be suboptimal as BIF is purposedly trained for loop filtering stage. For example, BIF in loop filtering stage may be designed with some Look-up-Table (LUT) processing (e.g., which may be unsuitable for characteristics of intra prediction blocks). In some examples, intra BIF may be enabled (e.g., only) for intra planar and angular modes. In some examples, intra BIF may employ LUTs of BIF used in in-loop filtering and/or their formulations to construct the filtered samples for intra predictions. It may be disadvantageous for some cases in intra BIF, for example, due to those LUTs being particularly trained for BIF of in-loop filter performance. In some examples, two parts of parameter derivations for intra BIF may be provided, such as LUT-based scale factor of the $LUT_{i,j,QP}$ and LUT-based scale factor of the BIF's offset ($\delta_{BIF}$) constructions, which may be a drawback for intra BIF.

In one or more examples as described herein, the use of LUT-based parameters, such as the scale factor of the $LUT_{i,j,QP}$ and by extension the scale factor of the BIF's offset ($\delta_{BIF}$) for intra BIF may be discarded, for example, to improve the intra BIF performance.

On intra prediction, a BIF may be provided to remedy coding noise inside prediction samples. Intra BIF may provide edge-protection for objects in a block resulting in some improvements for intra prediction performance. In some examples, the nature of intra BIF may be similar to BIF implemented for loop-filtering stage (e.g., this approach may be suboptimal for intra BIF). One or more examples as described herein may improve coding efficiency of intra BIF.

In one or more examples herein, a BIF parameter for intra BIF may not be determined using an LUT (e.g., the BIF parameter for intra BIF may not be determined using an LUT that includes one or more coefficients associated with a coding block). For example, the BIF parameter may be a scale factor.

In examples, a scale factor of an intra BIF may be adjusted. For example, the MAD of multiple coding block samples (e.g., samples of a coding block) may be determined to be used (e.g., directly used) as a BIF parameter for intra BIF.

In some examples, a scale factor of intra BIF may be determined based on LUT-based ($LUT_{i,j,QP}$) coefficients). This $LUT_{i,j,QP}$ associated with intra BIF may be designed using one or more examples associated with $LUT_{i,j,QP}$ of BIF in in-loop filtering (e.g., designed with the same LUT-based as BIF in in-loop filtering). A (e.g., the only) difference may include that the BIF in in-loop filtering (e.g., taking the scale factor $C_{i,j}$ (e.g., corresponds to $C_{1,0}$, $C_{1,1}$, and $C_{2,0}$)) may depend on the mean absolute difference (MAD) of the transform unit (TU) block information instead of the MAD of the coding unit (CU) block information. Three LUTs may be computed for three different neighbor distances (1, ^2, and 2) as:

$$\mathrm{LUT}_{i,j,\mathrm{QP}}(k) = \left(C_{i,j} \cdot \mathrm{LUT}_{\mathrm{base,QP}}(k) + 4\right) \gg 3,$$

$\text{LUT}_{\text{base,QP}}(k)$ may include 1x3 non-negative 8-bit integer values (e.g., for luma {16, 12, 11} and for chroma {16, 8, 6}). In some examples, LUTs in intra and in-loop filter may share the same coefficients. In such examples, it may not be suitable use the LUT associated with intra BIF for in-loop filtering BIF, since the in-loop filtering BIF (e.g., in-loop BIF performance) is specifically trained.

In one or more examples as described herein, LUT-based scale factor $C_{i,j}$ may not be used (e.g., may be discarded) for intra BIF. The MAD value (e.g., instead of using the LUT-based $C_{i,j}$) may be used (e.g., directly used) as the scale factor C for intra BIF. The MAD of a $(h \times w)$-size CU may be (e.g., precisely) calculated based on the CU block content or channel samples denoted by $s_{i,j}^{CU}$, for example, defined as follows:

$$C = \text{MAD}_{\text{CU}} = \frac{1}{hw} \sum_{i=1}^{h} \sum_{j=1}^{w} \left| s_{i,j}^{CU} - \frac{1}{hw} \sum_{i=1}^{h} \sum_{j=1}^{w} s_{i,j}^{CU} \right|.$$

As shown in the equation above, the scale factor C for an intra BIF may not be determined using an LUT. The scale factor C may be equal to the MAD of a $(h \times w)$-size coding block (e.g., a CU). The MAD of the coding block may be determined based on the coding block samples of the coding block (e.g., the CU block content or channel samples denoted by $s_{i,j}^{CU}$) and/or the width/height of the coding block.

In examples, the MAD of the coding block samples may be constrained to a range of values. For example, MAD_CU (e.g., alternatively) may be further capped to a certain range with the base quantization parameter (QP) value as its maximum value, as such:

$$C = C_{MAD} = \min\left(\text{MAD}_{\text{CU}} \gg 1, QP\right) - \left((w + h) \gg 2\right)$$

The scale factor for intra BIF may be applied to $\text{LUT}_{\text{base,QP}}(k)$. Accordingly, the $\text{LUT}_{i,j,\text{QP}}(k)$ may be rewritten as:

$$\text{LUT}_{\text{QP}}(k) = \left(C \cdot \text{LUT}_{\text{base,QP}}(k) + 4\right) \gg 3,$$

And/or the $F_{\text{BIF},i,j,\text{QP}}(d)$ may be simplified as:

$$F_{\text{BIF,QP}}(d) = \text{LUT}_{\text{QP}}(k) \gg 1.$$

In examples, a BIF parameter may include an offset of an intra BIF. In some examples, the intra BIF may construct a BIF's offset ($\delta_{BIF}$) with the same formulation as in BIF of in-loop filtering, expressed as:

$$\delta_{BIF} = \left(C_{CU} \cdot \left[ \sum sign\left(S_{i,j} - S_{0,0}\right) \cdot F_{BIF,i,j,QP}(|S_{i,j} - S_{0,0}|) \right] + 16\right) \gg 5$$

$C_{\text{CU}}$ may be a scale factor for the BIF's offset construction derived based on two LUTs, such as the CU shape size ($C_{w,h}^{\text{CU}}$). The CU scale factor may depend on the MAD of the CU ($C_{\text{MAD}}^{\text{CU}}$), defined as:

$$C_{\text{CU}} = C_{w,h}^{\text{CU}} + C_{\text{MAD}}^{\text{CU}},$$

The $C_{w,h}^{\text{CU}}$ may take the size of CU block information that has LUT entries of 2x64 non-negative 8-bit integer values (in range of between 4 to 10 for Luma and between 8 to 13 for chroma). $C_{\text{MAD}}^{\text{CU}}$ may be based on the MAD of the CU containing 2x16 non-negative 8-bit integer values (e.g., in range of between 0 to 7 for luma and between 0 to 11 for chroma). These scale factors may be defined as follows:

$$C_{w,h}^{\text{CU}} = \text{LUT}_{w,h}(\log_2 \text{width}_{\text{CU}}, \log_2 \text{height}_{\text{CU}}),$$

$$C_{\mathrm{MAD}}^{\mathrm{CU}} = \mathrm{LUT}_{\mathrm{MAD}}(\min(\mathrm{MAD}_{\mathrm{CU}} \gg 4, 15)).$$

In one or more examples as described herein, those two $C_{w,h}^{\mathrm{CU}}$ and $C_{\mathrm{MAD}}^{\mathrm{CU}}$ LUTs may not be used (e.g., may be removed), and/or the MAD of CU block as described in one or more examples herein may be used (e.g., directly used) by keeping the range of MAD_CU, for example, described as:

$$C_{CU} = C_{MAD} = \min(\mathrm{MAD}_{\mathrm{CU}} \gg 1, 17) - \big((w + h) \gg 2\big)$$

w = min {log$_2$ width$_{\mathrm{CU}}$, 7} and h = min {log$_2$ height$_{\mathrm{CU}}$, 7}. Accordingly, $C_{CU} = C_{MAD}$ may be true. In examples, a scale factor for the BIF offset may be constrained to a range of values (e.g., the range may be determined by $min(MAD_{CU}$ >> 1,17) which is then subtracted by $((w+h) >> 2)$, as illustrated in the equation above). In examples, a scale factor for the BIF offset may be constrained to a range of values if/when the MAD of the coding block samples is used as the scale factor for the BIF offset (e.g., instead of directly using MAD_CU as a scale factor for the BIF's offset, the scale factor may be controlled to a certain range given directly the block content information based on the MAD_CU for the BIF's offset).

Encoding tools and techniques (e.g., as illustrated in FIG. 2) including one or more of quantization, entropy coding, inverse quantization, transformation, and differential coding may be used to enable one or more examples as described herein in the encoder. These encoding tools and techniques may be used to enable one or more of: determining a BIF parameter (e.g., a scale factor); determining an MAD of a plurality of coding block samples; determining to use the MAD of the plurality of coding block samples as a BIF parameter, for example, for intra BIF; generating an intra-predicted sample of a coding block based on the BIF parameter; encoding the coding block based on the intra-predicted sample of the coding block; refrain from determining the scale factor using an LUT (e.g., refrain from determining the scale factor using an LUT that includes one or more coefficients associated with the coding block); constraining the MAD of the plurality of the coding block samples to a range of values (e.g., for determining the scale factor); using a quantization parameter associated with the coding block as a maximum value of the range; determining to use the MAD of the plurality of coding block samples as a scale factor associated with a second BIF parameter (e.g., a BIF offset); determining the second BIF parameter based on the scale factor associated with the second BIF parameter; generating the intra-predicted sample of the coding block further based on the second BIF parameter; applying the BIF parameter (e.g., the scale factor and/or the BIF offset) to a plurality of reference samples of a coding block to generate a plurality of filtered reference samples; generating the intra-prediction sample of the coding block by performing an intra-prediction of the coding block using at least one of the plurality of filtered reference samples; performing an intra prediction of the coding block using the plurality of reference samples of the coding block; applying the BIF parameter to the intra prediction of the coding block to generate a filtered intra-predicted sample of the coding block; generating a residual based on the intra-prediction sample of the coding block; sending the residual; etc.

Decoding tools and techniques (e.g., as illustrated in FIG. 3) including, for example, one or more of entropy decoding, inverse quantization, inverse transformation, and differential decoding may be used to enable one or more examples as described herein. For example, these decoding tools and techniques may be used to enable one or more of: determining a BIF parameter (e.g., a scale factor); determining an MAD of a plurality of coding block samples; determining to use the MAD of the plurality of coding block samples as a BIF parameter, for example, for intra BIF; generating an intra-predicted sample of a coding block based on the BIF parameter; decoding the coding block based on the intra-predicted sample of the coding block; refrain from determining the scale factor using an LUT (e.g., refrain from determining the scale factor using an LUT that includes one or more coefficients associated with the coding block); constraining the MAD of the plurality of the coding block samples to a range of values (e.g., for determining the scale factor); using a quantization parameter associated with the coding block as a maximum value of the range; determining to use the MAD of the plurality of coding block samples as a scale factor associated with a second BIF parameter (e.g., a BIF offset); determining the second BIF parameter based on the scale factor associated with the second BIF parameter; generating the intra-predicted sample of the coding block further based on the second BIF parameter; applying the BIF parameter (e.g., the scale factor and/or the BIF offset) to a plurality of reference samples of a coding block to generate a plurality of filtered reference samples; generating the intra-prediction sample of the coding block by performing an intra-prediction of the coding block using at least one of the plurality of filtered reference samples; performing an intra prediction of the coding block using the plurality of reference samples of the coding block; applying the BIF parameter to the intra prediction of the coding block to generate a filtered intra-predicted sample of the coding block; obtaining a residual based on a TU associated with the coding block; decoding the coding block further based on the residual; etc.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, comprising:
   a processor configured to:

   determine a mean absolute difference (MAD) of a plurality of coding block samples;
   determine to use the MAD of the plurality of coding block samples as a bilateral filtering (BIF) parameter for intra BIF;
   generate an intra-predicted sample of a coding block based on the BIF parameter; and
   decode the coding block based on the intra-predicted sample of the coding block.

2. A device for video encoding, comprising:
   a processor configured to:

   determine a mean absolute difference (MAD) of a plurality of coding block samples;
   determine to use the MAD of the plurality of coding block samples as a bilateral filtering (BIF) parameter for intra BIF;
generate an intra-predicted sample of a coding block based on the BIF parameter; and
encode the coding block based on the intra-predicted sample of the coding block.

3. The device of claim 1 or claim 2, wherein the BIF parameter is a scale factor, and wherein the scale factor is not determined using a look up table (LUT).

4. The device of claim 1 or claim 2, wherein the BIF parameter is a scale factor, and wherein the scale factor is not determined using a look up table (LUT) that comprises one or more coefficients associated with the coding block.

5. The device of claim 1 or claim 2, wherein the processor is configured to constrain the MAD of the plurality of the coding block samples to a range of values, and wherein a maximum value of the range is a quantization parameter associated with the coding block.

6. The device of claim 1 or claim 2, wherein the BIF parameter is a first BIF parameter, and the processor is further configured to:

determine to use the MAD of the plurality of coding block samples as a scale factor associated with a second BIF parameter; and
determine the second BIF parameter based on the scale factor associated with the second BIF parameter, wherein the second BIF parameter is a BIF offset, and wherein the intra-predicted sample of the coding block is generated further based on the second BIF parameter.

7. The device of claim 6, wherein the processor is further configured to constrain the MAD of the plurality of the coding block samples to a range of values.

8. The device of claim 1 or claim 2, wherein the plurality of coding block samples is a plurality of reference samples in a reference coding block of the coding block, and wherein the processor is further configured to:
apply the BIF parameter to the plurality of reference samples to generate a plurality of filtered reference samples, wherein the intra-prediction sample of the coding block is generated by performing an intra-prediction of the coding block using at least one of the plurality of filtered reference samples.

9. The device of claim 1 or claim 2, wherein the intra-predicted sample of the coding block is a filtered intra-predicted sample of the coding block, and the processor is further configured to:

obtaining a plurality of reference samples of the coding block;
perform an intra prediction of the coding block using the plurality of reference samples of the coding block; and
applying the BIF parameter to the intra prediction of the coding block to generate the filtered intra-predicted sample of the coding block.

10. The device of claim 1, wherein the processor is further configured to:
obtain a residual based on a transform unit (TU) associated with the coding block, wherein the coding block is decoded further based on the residual.

11. A method for video decoding, comprising:

determining a mean absolute difference (MAD) of a plurality of coding block samples;
determining to use the MAD of the plurality of coding block samples as a bilateral filtering (BIF) parameter for intra BIF;
generating an intra-predicted sample of a coding block based on the BIF parameter; and
decoding the coding block based on the intra-predicted sample of the coding block.

12. A method for video encoding, comprising:

determining a mean absolute difference (MAD) of a plurality of coding block samples;
determining to use the MAD of the plurality of coding block samples as a bilateral filtering (BIF) parameter for intra BIF;
generating an intra-predicted sample of a coding block based on the BIF parameter; and

encoding the coding block based on the intra-predicted sample of the coding block.

13. The method of claim 11 or claim 12, wherein the method further comprises constraining the MAD of the plurality of the coding block samples to a range of values, and wherein a maximum value of the range is a quantization parameter associated with the coding block.

14. The method of claim 11 or claim 12, wherein the BIF parameter is a first BIF parameter, and the method further comprises:

determining to use the MAD of the plurality of coding block samples as a scale factor associated with a second BIF parameter; and
determining the second BIF parameter based on the scale factor associated with the second BIF parameter, wherein the second BIF parameter is a BIF offset, and wherein the intra-predicted sample of the coding block is generated further based on the second BIF parameter.

15. The method of claim 14, further comprising constraining the MAD of the plurality of the coding block samples to a range of values.

**FIG. 1**

EP 4 730 783 A1

FIG. 2

EP 4 730 783 A1

**FIG. 3**

Plus sign shaped filter aperture

8x8 TU

**FIG. 4**

Coefficient
Look-up-table

Bilateral
Filtering

Plus sign shaped filter
aperture

Output Pixel

# FIG. 5

$P_{2,0}$

$P_{1,0}$  $P_{0,0}$  $P_{3,0}$

$P_{4,0}$

**FIG. 6**

| | | |
|---|---|---|
| $P_{2,-4}$ | $P_{2,-3}$ | $P_{2,-2}$ |
| $P_{0,-4}$ $P_{2,-1}$ | $P_{0,-3}$ $P_{2,0}$ | $P_{0,-2}$ $P_{2,1}$ |
| $P_{0,-1}$ $P_{2,2}$ | $P_{0,0}$ $P_{2,3}$ | $P_{0,-1}$ $P_{2,4}$ |
| $P_{0,2}$ | $P_{0,3}$ | $P_{0,4}$ |

Window associated

with the sample $P_{0,0}$

Window associated

with the sample $P_{2,0}$

**FIG. 7**

EP 4 730 783 A1

**FIG. 8**

Samples from deblocking

```
┌──────────┐          ┌──────────┐
│   BIF    │          │   SAO    │
└──────────┘          └──────────┘
```

+

Clip

Samples to ALF

# FIG. 9

EP 4 730 783 A1

EP 4 730 783 A1

$$
\begin{array}{ccccc}
 & & I_{AA} & & \\
 & I_{NW} & I_{A} & I_{NE} & \\
I_{LL} & I_{L} & I_{C} & I_{R} & I_{RR} \\
 & I_{SW} & I_{B} & I_{SE} & \\
 & & I_{BB} & & \\
\end{array}
$$

**FIG. 10**

Chroma  Samples from deblocking

BIF CHROMA

SAO

$+$

Add  and Clip

Output chroma Samples

**FIG. 11**

**FIG. 12**

EP 4 730 783 A1

FIG. 13

Europäisches
Patentamt

European
Patent Office

Office européen
des brevets

# EUROPEAN SEARCH REPORT

**Application Number**

EP 24 30 6734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHCHUKIN (ERICSSON) V ET AL: "EE2-5.1: Dynamic Scaling of Bilateral Filter (BIF)", 32. JVET MEETING; 20231013 - 20231020; HANNOVER; (THE JOINT VIDEO EXPLORATION TEAM OF ISO/IEC JTC1/SC29/WG11 AND ITU-T SG.16 ), , no. JVET-AF0112 13 October 2023 (2023-10-13), XP030312179, Retrieved from the Internet: URL:https://jvet-experts.org/doc_end_user/documents/32_Hannover/wg11/JVET-AF0112-v2.zip JVET-AF0112-v2.docx [retrieved on 2023-10-13] * Sections 2 and 3 * | 1-15 | INV. H04N19/117 H04N19/86 |
| X | SEREGIN V ET AL: "EE2: Summary report of exploration experiment on enhanced compression beyond VVC capability", 32. JVET MEETING; 20231013 - 20231020; HANNOVER; (THE JOINT VIDEO EXPLORATION TEAM OF ISO/IEC JTC1/SC29/WG11 AND ITU-T SG.16 ), , no. JVET-AF0024 13 October 2023 (2023-10-13), XP030312033, Retrieved from the Internet: URL:https://jvet-experts.org/doc_end_user/documents/32_Hannover/wg11/JVET-AF0024-v1.zip JVET-AF0024-v1.docx [retrieved on 2023-10-13] * Section 2.5 * | 1-15 | |
| A | US 2024/137574 A1 (YIN WENBIN [CN] ET AL) 25 April 2024 (2024-04-25) * paragraph [0075] * | 8-10 | |

**TECHNICAL FIELDS SEARCHED (IPC)**

H04N

-/--

The present search report has been drawn up for all claims

| Place of search | Date of completion of the search | Examiner |
|---|---|---|
| Munich | 25 March 2025 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 30 6734

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/296364 A1 (RUSANOVSKYY DMYTRO [US] ET AL) 17 September 2020 (2020-09-17) * lines 164,169,224 * ----- | 8-10 | |
| | | | **TECHNICAL FIELDS SEARCHED (IPC)** |

The present search report has been drawn up for all claims

| Place of search | Date of completion of the search | Examiner |
|---|---|---|
| Munich | 25 March 2025 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                            

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 30 6734

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | Publication date | Patent family member(s) | Publication date |
|---|---|---|---|
| US 2024137574 A1 | 25-04-2024 | CN 117769833 A<br>US 2024137574 A1<br>WO 2022268184 A1 | 26-03-2024<br>25-04-2024<br>29-12-2022 |
| US 2020296364 A1 | 17-09-2020 | NONE | |

EPO FORM P0459

For more details about this annex : see Official Journal of the European Patent Office, No. 12/82